Europäisches Patentamt

European Patent Office

Office européen des brevets

(11) Veröffentlichungsnummer: **0 344 531**
**A2**

(12) **EUROPÄISCHE PATENTANMELDUNG**

(21) Anmeldenummer: 89108957.5

(22) Anmeldetag: 18.05.89

(51) Int. Cl.⁴: **B26F 3/00**

(30) Priorität: 01.06.88 DE 3818669

(43) Veröffentlichungstag der Anmeldung:
06.12.89 Patentblatt 89/49

(84) Benannte Vertragsstaaten:
DE FR GB IT

(71) Anmelder: **Dynamit Nobel Aktiengesellschaft**
**Postfach 12 61**
**D-5210 Troisdorf/Bez. Köln(DE)**

(72) Erfinder: **Bender, Richard, Dr.**
**Hohe Marter 28**
**D-8560 Lauf(DE)**
Erfinder: **Scheiderer, Gerrit**
**Spitzwiesenstrasse 16**
**D-8510 Fürth(DE)**

(54) **Seiltrennvorrichtung.**

(57) Die Sicherheit einer Seiltrennvorrichtung wird verbessert, wenn ein Faserseil (13) im Schnittbereich einer Seiltrennvorrichtung von einer Hülle (15) ummantelt ist, so daß beim Schnitt durch das teilweise Breitquetschen des Seiles entstehende Fasern nicht zwischen Schneidwerkzeug (3) und Schachtwand (2) gelangen können. Als Hülle (15) ist Kunststoffschlauch besonders geeignet; geschlitzter Schlauch ist besonders einfach anzubringen.

EP 0 344 531 A2

# Seiltrennvorrichtung

Die Erfindung richtet sich auf eine Seiltrennvorrichtung, enthaltend ein explosionsgetriebenes Schneidwerkzeug, das auf einen Amboß schlagend ein darübergeführtes Seil trennt.

Seiltrennvorrichtungen sind Sicherheitselemente, die bei einer unerwarteten, bedrohlichen Situation sehr rasch eine Überlastung abbauen müssen. Bei einer aus der GB 2 119 347 A bekannten Sicherheitseinrichtung, mit der im Notfall das Seil eines Kranes gekappt werden kann, schlägt ein Meißel senkrecht auf das in einem Block geführten Seil; die meißelabgewandte Seite der Bohrung in dem Block übernimmt dabei eine Amboßfunktion; gleichzeitig wird der Meißelweg auch noch durch einen Anschlag begrenzt. Eine solche mechanisch aufwendige Seiltrennvorrichtung ist für viele Einmalartikel, wie z.B. einen Reffleinenschneider, viel zu teuer.

Eine Seiltrennvorrichtung mit einer weniger aufwendigen Seilführung ist in der WO 84/02 769 beschrieben. Das Seil wird hier zur Führung in Kerben in die Schachtwand der Schneideeinrichtung eingelegt, wobei der Durchmesser des Schneidwerkzeuges nicht wesentlich größer als der Seildurchmesser ist. Bei solchen preiswerteren Seiltrennvorrichtungen ist die Führung des Schneidwerkzeuges auch nicht hochgenau. Daher kommen Fasern des üblicherweise nicht stark gespannten Seiles durch das zunächst teilweise erfolgende Breitquetschen des Seiles bis an den Rand des Schneidwerkzeuges und gelangen auch in Spalt zwischen Schneidwerkzeug und Schachtwand. Dadurch wird das Schneidwerkzeug gebremst, in ungünstigen Fallen reicht die Kraft nicht mehr zum vollständigen Durchschlagen des Seiles aus.

Aufgabe der Erfindung ist es, bei einer relativ billigen Seiltrennvorrichtung, z.B. einem Reffleinenschneider, die Seilfüh rung so zu gestalten, daß auch ein sehr fasriges, üblicherweise nicht stark gespanntes Seil einwandfrei getrennt wird.

Die Aufgabe wird erfindungsgemäß dadurch gelöst, daß das Seil im Schnittbereich von einer Hülle ummantelt ist. Weitere vorteilhafte Ausgestaltungen der Erfindung sind in den Unteransprüchen beschrieben.

Durch diese sehr einfache, auch nachträglich an Seiltrennvorrichtungen anzubringende Maßnahme wird die Schnittqualität erhöht, wobei eine Verstärkung der Antriebsladung für das Schneidwerkzeug in der Regel nicht erforderlich ist.

Die Hülle, mit der das Seil im Schnittbereich ummantelt wird, ist bevorzugt ein Kunststoffschlauch, wobei Härte, Wanddicke und struktureller Aufbau nicht kritisch und leicht zu optimieren sind.

Es hat sich gezeigt, daß auch ein geschlitztes Rohr, das einfach auf dem Seil anzubringen ist, den Anforderungen genügt.

Die vorgeschlagene Maßnahme ist für alle herkömmlichen Schneidwerkzeuge brauchbar; die wichtigsten sind Meißel und Ringschneider. Die Hülle um das Seil verhindert in allen Fällen, daß der Schnittvorgang durch die "losen" Fasern im Randbereich des Seils gestört wird.

Die Erfindung ist für einen Reffleinenschneider in der Zeichnung dargestellt und weiter beispielhaft erläutert. Die Figur zeigt einen Schnitt durch die Schachtwand eines Reffleinenschneiders mit einem explosionsgetriebenen Meißel.

Der Reffleinenschneider besteht im wesentlichen aus dem zylindrischen Grundkörper 1, wobei der untere Teil als Schacht 2 ausgebildet ist, durch den das Schneidwerkzeug 3 geführt wird; der mittlere Teil enthält die Kartusche 4, die das erforderliche Treibgas zum Antrieb des Schneidwerkzeuges 3 erzeugt und im oberen Teil ist die Auslösevorrichtung 5 untergebracht.

Die Auslösevorrichtung 5 besteht hier im wesentlichen aus dem Schlagbolzen 6, der im Ruhezustand nicht oder wenig vorgespannt ist, und dem Ansatzstück 11. Am Schlagbolzen 6 ist in seinem oberen ( von der Kartusche 4 abgewandten) Bereich und korrespondierend dazu am unteren Bereich des Ansatzstückes 11 Material abgearbeitet, so daß dort diese beiden Teile mit einer gemeinsamen, parallel zu der Achse des Grundkörpers 1 verlaufenden Fläche aneinanderstoßen können. Dabei ist am Schlagbolzen 6 innerhalb dieser Fläche eine beispielsweise halbkugel- oder halbzylinderförmige Vertiefung (Pfanne) eingearbeitet und an der Fläche am Ansatzstück eine dazu korrespondierende Erhöhung stehengeblieben, so daß zwischen Schlagbolzen 6 und Ansatzstück 11 eine formschlüssige Verbindung vorhanden ist, solange dieser Bereich von der Hülle des Grundkörpers 1 umfaßt und dadurch ein radiales Auseinanderfallen unmöglich ist.

Die Lage dieses Kupplungsbereiches zwischen Schlagbolzen 6 und Ansatzstück 11 in der Hülle des Grundkörpers 1 ist so festgelegt. daß - wenn an der Schnur 7 in Richtung des Pfeiles 8 gezogen wird, dabei die Feder 10 soweit gespannt wird. daß sie den Schlagbolzen 6 so beschleunigen kann. damit er die Kartusche 4 auslöst - bei Erreichen der Mindestspannung das Ansatzstück 11 aus der Hülle des Grundkörpers 1 herausrutscht. In diesem Augenblick wird die Erhöhung an dem Ansatzstück 11 nicht mehr länger in die korrespondierende Pfanne in dem Schlagbolzen 6 gedrückt. und der Schlagbolzen 6 kann frei zurückfedern.

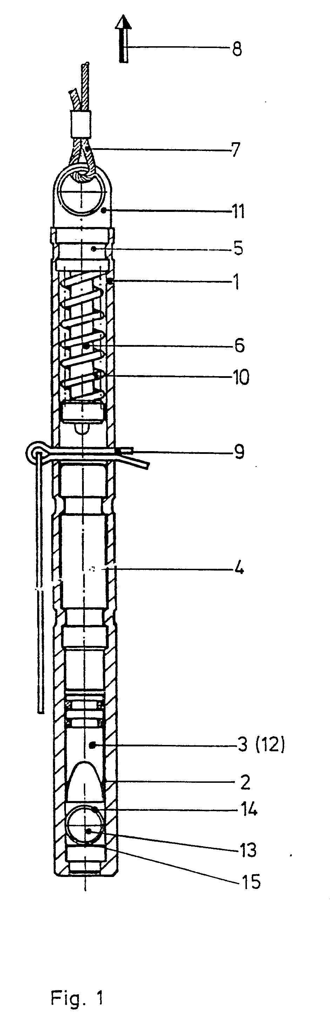

Diese Auslösevorrichtung beruht auf einem ähnlichen Prinzip wie beispielsweise bei dem in Figur 1 der DE-OS 2 701 935 gezeigten Schaltelement: Durch eine Zugbewegung wird eine Feder auf eine festgelegte Art gespannt, bei Fortsetzen der Zugbewegung wird der Schlagbolzen entkoppelt. Auch andere, etwa von Feuerlöschern her bekannte Auslösevorrichtungen sind geeignet.

Die Treibgase aus der Kartusche 4 beschleunigen das Schneidwerkzeug 3, hier den Meißel 12, dessen Schneidmesser senkrecht zur Seilrichtung verläuft. Das Seil 13 wird durch zwei Bohrungen 14 in der Schachtwand 2 geführt. Da das Seil 13 nicht stark gespannt zu sein braucht, wird es von dem Meißel 12 zunächst teilweise plattgequetscht, und bei Faserseilen könnten dadurch auch Fasern zwischen den Meißel 12 und die Schachtwand 2 gelangen, was sich nur durch eine hochpräzise Fertigung von Schneidwerkzeug und Schachtwand (radiales Spiel unter 0,10 mm) vermeiden ließe.

Gemäß der Erfindung bewirkt die Hülle 15, hier ein Schlauch von 0,5 mm Dicke aus Polyethylen, um das Faserseil 13 von 4 mm Durchmesser, daß ein 5 mm breiter Meißel 12, der keine teuere, hochpräzise Führung im Schacht 2 benötigt, alle Fasern sauber abschneidet und keine Fasern vom Schneidwerkzeug 3 eingeklemmt werden. Die Bohrungen 14, die auf den Seildurchmesser abgestimmt sind, sollen dabei um die doppelte Wanddicke der Hülle 15 aufgeweitet werden. Eine Vergrößerung der Kartusche ist nicht erforderlich. Die Hülle 15 wird von den Bohrungen 14 in der Schachtwand 2 gestützt. Die Hülle 15 kann auch geschlitzt sein, wobei der Schlitz zum Meißel hinweisen sollte.

In diesem Beispiel hat der Meißel 12, von der Seite betrachtet, eine gerade, waagerecht verlaufende Schneide und wirkt mittig auf das Seil zwischen den Führungen in der Schachtwand. Andere Formen des Schneidwerkzeuges sind ebenfalls möglich, beispielsweise eine in der Mitte eingekerbte Schneide oder eine Ringschneide, die auch bei ganz schlaffen Seilen zum Abscheren im Bereich der Schachtwand günstig ist, andererseits aber eine höhere Antriebsleistung erfordert.

## Ansprüche

1. Seiltrennvorrichtung, enthaltend ein explosionsgetriebenes Schneidwerkzeug, das auf einen Amboß schlagend ein darübergeführtes Seil trennt, dadurch gekennzeichnet, daß das Seil (13) im Schnittbereich von einer Hülle (15) ummantelt ist.

2. Seiltrennvorrichtung nach Anspruch 1, dadurch gekennzeichnet, daß das Schneidwerkzeug (3) in einem Schacht (2) geführt ist und Bohrungen (14) oder Kerben in der Schachtwand für die Seilführung vorhanden und diese Bohrungen (14) oder Kerben um die doppelte Wanddicke der Hülle (15) aufgeweitet sind.

3. Seiltrennvorrichtung nach Anspruch 1 oder 2, dadurch gekennzeichnet, daß die Hülle (15) ein Kunststoffschlauch ist.

4. Seiltrennvorrichtung nach Anspruch 1, 2 oder 3, dadurch gekennzeichnet, daß die Hülle (15) längsgeschlitzt ist.

5. Seiltrennvorrichtung nach Anspruch 1, 2, 3 oder 4, dadurch gekennzeichnet, daß das Schneidwerkzeug (3) ein Meißel (12) ist.

6. Seiltrennvorrichtung nach Anspruch 1, 2, 3 oder 4, dadurch gekennzeichnet, daß das Schneidwerkzeug (3) ein Ringschneider ist.

7. Seiltrennvorrichtung nach einem der Ansprüche 1 bis 6, dadurch gekennzeichnet, daß die Schneide des Schneidwerkzeuges (3), von der Seite betrachtet, waagerecht, abgeschrägt, abgerundet oder gekerbt ist.

Fig. 1